# EUROPEAN PATENT APPLICATION

(11) **EP 3 974 748 A1**
(43) Date of publication of application: **30.03.2022**
(21) Application number: 19929282.2
(22) Date of filing: 20.05.2019
(51) Int. Cl.: F25D 13/00, F24F 11/74, F24F 11/79, F24F 11/86, F25D 17/06, F24F 110/10

(54) **COOLING CONTROL DEVICE, COOLING SYSTEM, AND COOLING CONTROL METHOD**

(71) Applicant: MITSUBISHI ELECTRIC CORPORATION, Chiyoda-ku Tokyo 100-8310 (JP)
(72) Inventor: WADA, Makoto, Tokyo 100-8310 (JP); HAMADA, Mamoru, Tokyo 100-8310 (JP); ONO, Hideki, Tokyo 100-8310 (JP)
(74) Representative: Bongiovanni, Simone
(86) International application number: PCT/JP2019/019855
(87) International publication number: WO 2020/234952

(57) **Abstract**

A cooling control device (13) acquires temperatures detected by a plurality of temperature sensors (14) installed at different positions in a target space (50). The cooling control device (13) identifies a target position where a temperature sensor (14) that has detected a temperature higher than a reference temperature is installed, among the plurality of temperature sensors (14), and controls an air volume of a blower (12) so that an upper limit of reach of air cooled by a heat exchanger (121) is within a target range defined about the target position as a reference.

## Description

### Technical Field

The present invention relates to a technique of cooling a target space.

### Background Art

There is a cooling system that circulates air cooled by a cooler, with wind generated by a blower, thereby cooling a target space. In this cooling system, a blower motor is designed to rotate at a rotation speed that can circulate the cooled air sufficiently in the target space.

However, in both of a case where an outside air temperature is low and a case where there are few temperature non-uniformities in the target space as in a case where stock items are not loaded in and unloaded from the target space frequently, a performance of the blower motor is excessive. As a result, the blower motor consumes power unnecessarily.

Patent Literature 1 describes how a rotation speed of a cooling fan is decreased when a temperature difference ΔT, which is a difference between a warehouse temperature and an evaporator temperature, changes within a permissible range during a checking period, the warehouse temperature being a temperature of a stock warehouse room, the evaporator temperature being a temperature of an evaporator. This prevents the cooling fan from consuming power unnecessarily.

### Citation List

### Patent Literature

Patent Literature 1: JP 2015-102315 A

### Summary of Invention

### Technical Problem

With a technique described in Patent Literature 1, when the rotation speed of the cooling fan is decreased and an air volume is reduced, the temperature may rise locally. With the technique described in Patent Literature 1, since the warehouse temperature is measured only at one point, appropriate control cannot be performed when the temperature rises locally.

An objective of the present invention is to perform control so that power consumption is reduced, while reducing temperature non-uniformities in the target space.

### Solution to Problem

A cooling control device according to the present invention includes:
a temperature acquisition unit to acquire temperatures detected by a plurality of temperature sensors installed at different positions in a target space; and
a wind control unit to refer to the temperatures acquired by the temperature acquisition unit so as to identify a target position, and to control an air volume of a blower so that an upper limit of reach of air cooled by a heat exchanger is within a target range defined about, as a reference, the target position where a temperature sensor that has detected a temperature higher than a reference temperature is installed, among the plurality of temperature sensors.

### Advantageous Effects of Invention

According to the present invention, an air volume of a blower is controlled so that an upper limit of reach of air cooled by a heat exchanger is within a target range defined about, as a reference, a target position where a temperature sensor that has detected a temperature higher than a reference temperature is installed, among a plurality of temperature sensors. This makes it possible to send the cooled air to a temperature-risen position while reducing power consumption. As a result, it becomes possible to perform control so that power consumption is reduced, while reducing temperature non-uniformities in the target space.

### Brief Description of Drawings

Fig. 1 is a configuration diagram of a cooling system 10 according to Embodiment 1.
Fig. 2 is a configuration diagram of a cooling control device 13 according to Embodiment 1.
Fig. 3 is a flowchart illustrating operations of the cooling system 10 according to Embodiment 1.
Fig. 4 is a diagram illustrating a relationship among a rotation speed of a motor of a blower 122, a frequency of a compressor 111, and a Coefficient Of Performance (COP) of the cooling system 10.
Fig. 5 is a diagram illustrating a specific example of the operations of the cooling system 10 according to Embodiment 1.
Fig. 6 is a configuration diagram of a cooling system 10 according to Embodiment 2.
Fig. 7 is a configuration diagram of a cooling control device 13 according to Embodiment 2.
Fig. 8 is a flowchart illustrating operations of the cooling system 10 according to Embodiment 2.
Fig. 9 is a configuration diagram of a cooling system 10 according to Embodiment 3.

### Description of Embodiments

### Embodiment 1.

### ^{∗∗∗} Description of Configurations ^{∗∗∗}

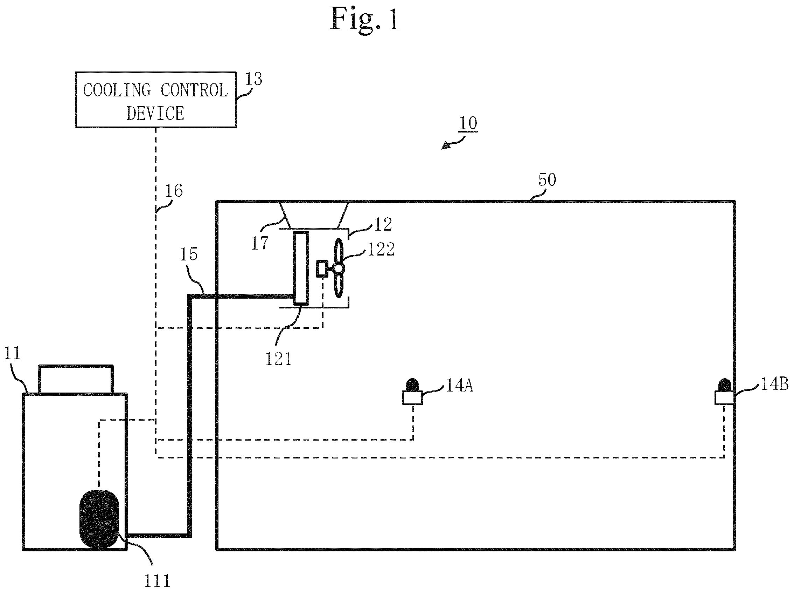

A configuration of a cooling system 10 according to Embodiment 1 will be described with referring to Fig. 1.

The cooling system 10 is a system that constitutes a vapor compression type refrigeration cycle to cool a target space 50.

The cooling system 10 is provided with a heat source machine 11, a cooling machine 12, a cooling control device 13, and a plurality of temperature sensors 14 installed at different positions in the target space 50. The heat source machine 11 and the cooling machine 12 are connected to each other via a refrigerant pipe 15 so as to constitute the vapor compression type refrigeration cycle. The cooling control device 13 is connected to the heat source machine 11, the cooling machine 12, and the temperature sensors 14, via a signal line 16.

The heat source machine 11 is installed outside of the target space 50. The heat source machine 11 is provided with an apparatus such as an inverter type compressor 111. The cooling machine 12 is installed in the target space 50 by a hanging tool 17 or the like. The cooling machine 12 is provided with apparatuses such as a heat exchanger 121 and an inverter type blower 122. The heat exchanger 121 exchanges heat between a refrigerant cooled by the heat source machine 11 and air in the target space 50, thereby cooling the air in the target space 50.

In Fig. 1, the cooling system 10 is provided with two temperature sensors 14 which are a temperature sensor 14A and a temperature sensor 14B, as the plurality of temperature sensors 14. In Fig. 1, the temperature sensor 14A is installed in the vicinity of the cooling machine 12, and the temperature sensor 14B is installed deep in the target space 50 and remote from the cooling machine 12.

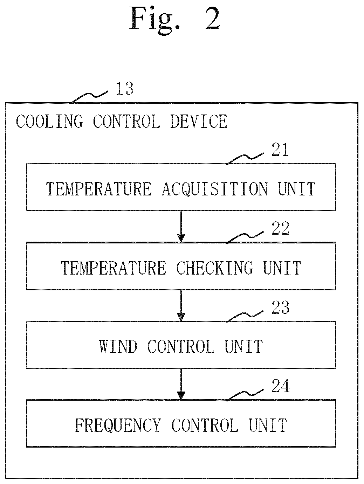

A configuration of the cooling control device 13 according to Embodiment 1 will be described with referring to Fig. 2.

The cooling control device 13 is a computer such as a microcomputer.

The cooling control device 13 is provided with a temperature acquisition unit 21, a temperature checking unit 22, a wind control unit 23, and a frequency control unit 24, as function constituent elements.

The temperature acquisition unit 21 acquires temperatures detected by the plurality of temperature sensors 14. The wind control unit 23 refers to the temperatures acquired by the temperature acquisition unit 21 so as to identify a target position where a temperature sensor 14 that has detected a temperature higher than a reference temperature is installed, among the plurality of temperature sensors 14. The wind control unit 23 controls an air volume of the blower 122 so that an upper limit of reach of air cooled by the heat exchanger 121 is within a target range defined about the target position as a reference. The frequency control unit 24 controls the compressor 111 with a frequency that increases an operation efficiency in accordance with the air volume controlled by the wind control unit 23.

### ^{∗∗∗} Description of Operations ^{∗∗∗}

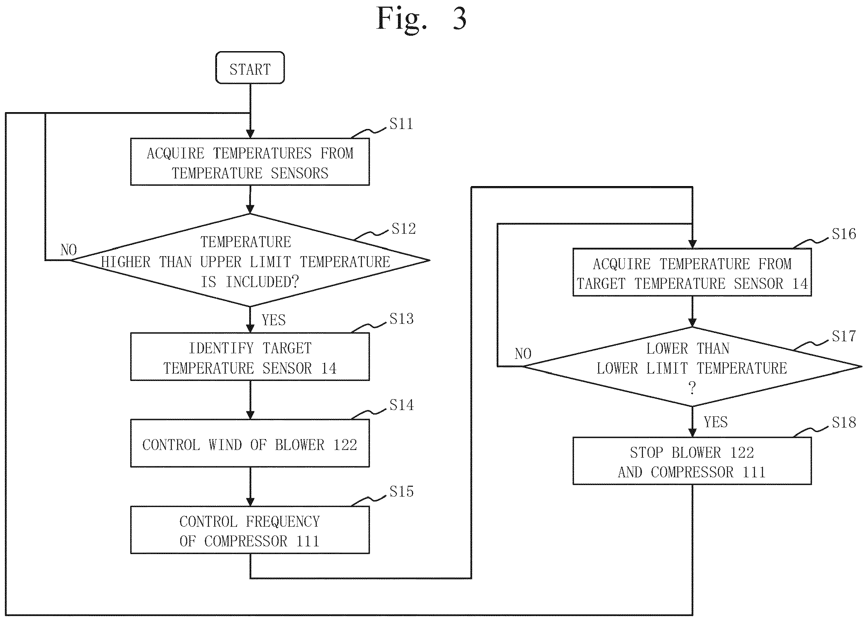

Operations of the cooling system 10 according to Embodiment 1 will be described with referring to Figs. 3 to 5.

The operations of the cooling system 10 according to Embodiment 1 correspond to a cooling control method according to Embodiment 1.

As a premise of following operations, an upper limit temperature and a lower limit temperature, and installation positions of the temperature sensors 14 are set in the cooling control device 13. A temperature sensor 14 located at a position where the temperature tends to rise most easily is also set in the cooling control device 13. The position where the temperature tends to rise most easily is a position that is the most remote from the blower 122 and that is the highest position.

Specifically, the upper limit temperature and the lower limit temperature, the installation positions of the temperature sensors 14, and an identifier of the temperature sensor 14 located at the position where the temperature tends to rise most easily are entered by a user and are stored in a memory of the cooling control device 13.

### (Step S11 of Fig. 3: First Temperature Detection Process)

The temperature sensors 14 detect temperatures. The temperature acquisition unit 21 of the cooling control device 13 acquires, via the signal line 16, the temperatures detected by the temperature sensors 14.

### (Step S12 of Fig. 3: Upper Limit Checking Process)

The temperature checking unit 22 of the cooling control device 13 checks whether or not a temperature higher than the upper limit temperature, which is the reference temperature, is included in the temperatures acquired by the temperature acquisition unit 21 in step S11. Note that in Embodiment 1, the upper limit temperature is used as the reference temperature. However, the reference temperature may be set independently of the upper limit temperature.

If a temperature higher than the upper limit temperature is included, the temperature checking unit 22 forwards processing to step S13. On the other hand, if a temperature higher than the upper limit temperature is not included, the temperature checking unit 22 returns the processing back to step S11.

### (Step S13 of Fig. 3: Target Identification Process)

The wind control unit 23 of the cooling control device 13 identifies a temperature sensor 14 that has detected a temperature higher than the upper limit temperature, as a target temperature sensor 14.

There is a case where a plurality of temperature sensors 14 detect temperatures higher than the upper limit temperature. According to Embodiment 1, in this case, the wind control unit 23 identifies a temperature sensor 14 located at a position where the temperature tends to rise most easily, as the target temperature sensor 14. In Fig. 1, if both the temperature sensor 14A and the temperature sensor 14B detect temperatures higher than the upper limit temperature, the wind control unit 23 identifies the temperature sensor 14B located at the position remote from the blower 122, as the target temperature sensor 14.

### (Step S14 of Fig. 3: Wind Control Process)

The wind control unit 23 of the cooling control device 13 identifies the position where the target temperature sensor 14 identified in step S13 is installed, as the target position. Then, the wind control unit 23 controls the air volume of the blower 122 so that the upper limit of reach of air cooled by the heat exchanger is within the target range defined about the target position as the reference. That is, the wind control unit 23 controls the blower 122 to have such an air volume that air cooled by the heat exchanger 121 does not reach farther than the target range defined about the target position as the reference. As the blower 122 is of the inverter type, the blower 122 can control the air volume by changing a motor rotation speed by frequency control. The blower 122 changes the motor rotation speed according to control of the wind control unit 23.

The target range is a predetermined range including the target position and around the target position. For this reason, in the configuration of Fig. 1, if the temperature sensor 14 that has detected the temperature higher than the upper limit temperature is the temperature sensor 14B, the air volume of the blower 122 is controlled so that the cooled air reaches the vicinity of the position where the temperature sensor 14B is installed. In contrast to this, if the temperature sensor 14 that has detected the temperature higher than the upper limit temperature is the temperature sensor 14A, the air volume of the blower 122 is reduced so that the cooled air does not reach farther than the vicinity of the position where the temperature sensor 14A is installed.

When the plurality of temperature sensors 14 have detected temperatures higher than the upper limit temperature, the wind control unit 23 takes as the target position a position of the temperature sensor 14 that is the most remote from the blower 122 and that is installed at the highest position. Then, the wind control unit 23 controls the air volume of the blower 122 so that the upper limit of reach of air cooled by a heat exchanger is within the target range defined about the target position as the reference. When the air volume is controlled so that the cooled air reaches a position that is the most remote from the blower 122 and that is the highest position, the cooled air reaches also the other positions in the target space 50. This consequently cools also positions where the temperature sensors 14 that have detected temperatures higher than the upper limit temperature are installed.

### (Step S15 of Fig. 3: Frequency Control Process)

The frequency control unit 24 of the cooling control device 13 controls the compressor 111 with a frequency that increases an operation efficiency in accordance with the air volume controlled in step S14. As the compressor 111 is of the inverter type, the compressor 111 can change the rotation speed by frequency control, thereby changing the operation capacity. The compressor 111 changes the rotation speed according to control of the frequency control unit 24.

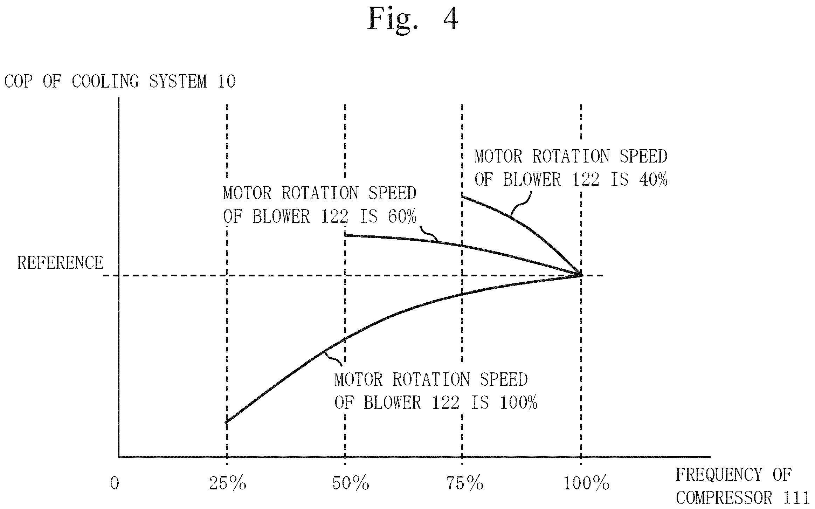

As illustrated in Fig. 4, a frequency of the compressor 111 that increases a Coefficient Of Performance (COP) of the cooling system 10 differs depending on the motor rotation speed of the blower 122. Fig. 4 illustrates the COP of the cooling system 10 for rotation speeds of the blower 122 which are obtained by changing the frequency of the compressor 111 while using, as a reference, a case where the frequency of the compressor 111 is 100%.

In the case of Fig. 4, if the rotation speed of the motor of the blower 122 is 100%, when the frequency of the compressor 111 is lowered, the COP of the cooling system 10 becomes lower than in the case where the frequency of the compressor 111 is 100%. In contrast to this, if the rotation speed of the motor of the blower 122 is 40% or 60%, when the frequency of the compressor 111 is lowered, the COP of the cooling system 10 becomes higher than in the case where the frequency of the compressor 111 is 100%. Hence, if the rotation speed of the motor of the blower 122 is controlled at 100%, the frequency control unit 24 controls the frequency of the compressor 111 at 100%. Meanwhile, if the rotation speed of the motor of the blower 122 is controlled at 40% or 60%, the frequency control unit 24 controls the frequency of the compressor 111 to a frequency that is lower than 100% and at which the COP of the cooling system 10 becomes the highest.

In Fig. 4, each curve of the graph is interrupted. This is because if the frequency of the compressor 111 is set excessively low, a refrigerating capacity necessary for processing a load cannot be obtained. Fig. 4 expresses that if the motor rotation speed of the blower 122 is 100%, when the frequency of the compressor 111 is set lower than 25%, a necessary refrigerating capacity cannot be obtained. Likewise, Fig. 4 expresses that if the motor rotation speed of the blower 122 is 60%, when the frequency of the compressor 111 is set lower than 50%, a necessary refrigerating capacity cannot be obtained; and that if the motor rotation speed of the blower 122 is 40%, when the frequency of the compressor 111 is set lower than 75%, a necessary refrigerating capacity cannot be obtained.

### (Step S16 of Fig. 3: Second Temperature Detection Process)

The target temperature sensor 14 identified in step S13 detects temperature. The temperature acquisition unit 21 of the cooling control device 13 acquires the temperature detected by the target temperature sensor 14, via the signal line 16.

### (Step S17 of Fig. 3: Lower Limit Checking Process)

The temperature checking unit 22 of the cooling control device 13 checks whether or not the temperature detected by the target temperature sensor 14, which is acquired in step S16 by the temperature acquisition unit 21, is lower than the lower limit temperature.

If the temperature is lower than the lower limit temperature, the temperature checking unit 22 forwards the processing to step S18. On the other hand, if the temperature is equal to or higher than the lower limit temperature, the temperature checking unit 22 returns the processing back to step S16.

### (Step S18 of Fig. 3: Stopping Process)

The wind control unit 23 of the cooling control device 13 performs control to stop the motor of the blower 122. The blower 122 stops the motor in accordance with control by the wind control unit 23. Also, the frequency control unit 24 of the cooling control device 13 performs control to stop the compressor 111. The compressor 111 stops in accordance with control by the frequency control unit 24.

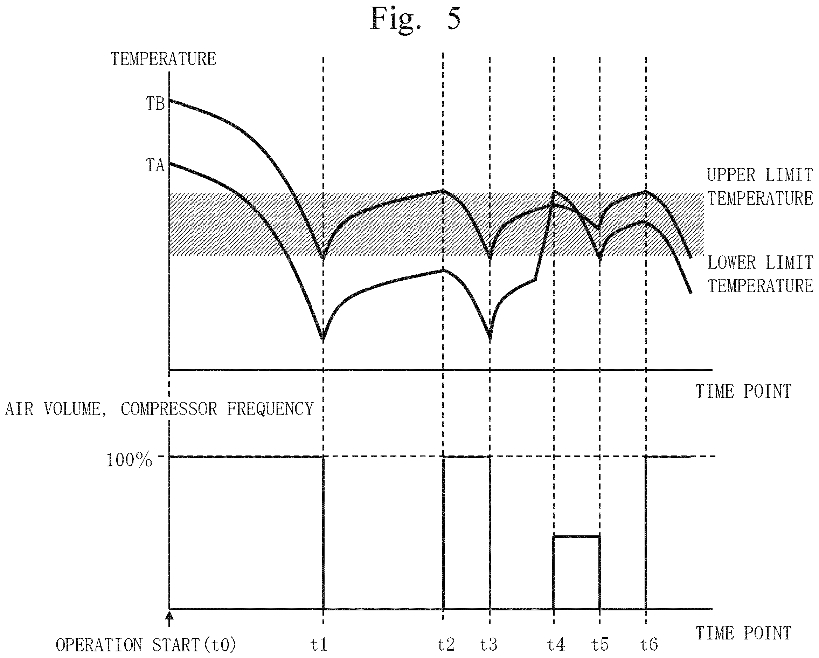

A specific example of the operations of the cooling system 10 according to Embodiment 1 will be described with referring to Fig. 5.

In Fig. 5, the cooling system 10 has the configuration illustrated in Fig. 1, and the COP of the cooling system 10 holds a relationship illustrated in Fig. 4.

At time point t0, the cooling system 10 starts operation. At this time, a temperature TA detected by the temperature sensor 14A and a temperature TB detected by the temperature sensor 14B are both higher than the upper limit temperature. As the temperatures higher than the upper limit temperature are detected, the processing advances from step S12 to step S13 of Fig. 3.

In step S13 of Fig. 3, as the plurality of temperature sensors 14 have detected temperatures higher than the upper limit temperature, the temperature sensor 14B, which is located at a position where the temperature tends to rise most easily, is identified as the target temperature sensor 14. In step S14 of Fig. 3, the blower 122 is controlled with a motor rotation speed of 100% so that cooled air reaches a periphery of the position where the temperature sensor 14B is installed. Accordingly, in step S15 of Fig. 3, the frequency of the compressor 111 is controlled at 100% so that the CPO of the cooling system 10 becomes high.

Then, the temperature TA and the temperature TB fall gradually.

At time point t1, the temperature TB detected by the temperature sensor 14B, being the target temperature sensor 14, has dropped below the lower limit temperature. As the temperature TB is lower than the lower limit temperature, the processing advances from step S17 to step S18 of Fig. 3. Then, in step S18 of Fig. 3, the motor of the blower 122 is stopped, and the compressor 111 is stopped.

Then, the temperature TA and the temperature TB rise gradually.

At time point t2, the temperature TB has risen above the upper limit temperature. As a temperature higher than the upper limit temperature is detected, the processing advances from step S12 to step S13 of Fig. 3.

In step S13 of Fig. 3, the temperature sensor 14B that has detected the temperature higher than the upper limit temperature is identified as the target temperature sensor 14. Then, in step S14 of Fig. 13, the blower 122 is controlled with a motor rotation speed of 100% so that the cooled air reaches the periphery of the position where the temperature sensor 14B is installed. Accordingly, in step S15 of Fig. 3, the frequency of the compressor 111 is controlled at 100% so that the COP of the cooling system 10 becomes high.

Then, the temperature TA and the temperature TB fall gradually.

At time point t3, the temperature TB detected by the temperature sensor 14B, being the target temperature sensor 14, has dropped below the lower limit temperature. As the temperature TB is lower than the lower limit value, the processing advances from step S17 to step S18 of Fig. 3. In step S18 of Fig. 3, the motor of the blower 122 is stopped, and the compressor 111 is stopped.

Then, the temperature TA and the temperature TB rise gradually.

At time point t4, the temperature TA has risen above the upper limit temperature. At this time, the temperature TB is equal to or lower than the upper limit temperature. It is possible that, due to some influence such as loading of an stock item to a warehouse, the temperature will become higher at a position where the temperature does not rise easily and where the temperature sensor 14A is installed, than at a position where the temperature tends to rise easily and where the temperature sensor 14B is installed. As a temperature higher than the upper limit temperature is detected, the processing advances from step S12 to step S13 of Fig. 3.

In step S13 of Fig. 3, the temperature sensor 14A that has detected the temperature higher than the upper limit temperature is identified as the target temperature sensor 14. Then, in step S14 of Fig. 3, the blower 122 is controlled so that the cooled air does not reach farther than the periphery of the position where the temperature sensor 14A is installed. Assume that the blower 122 is controlled with a motor rotation speed of 40%. Accordingly, in step S15 of Fig. 3, the frequency of the compressor 111 is controlled at 75% so that the COP of the cooling system 10 becomes high.

Then, the temperature TA and the temperature TB fall gradually.

Particularly, the temperature TA detected by the temperature sensor 14A falls sharply, the temperature sensor 14A being installed at the position to which the cooled air is sent, as compared to the temperature TB detected by the temperature sensor 14B installed at the position which the cooled air does not reach directly.

At time point t5, the temperature TA detected by the temperature sensor 14A, being the target temperature sensor 14, has dropped below the lower limit temperature. As the temperature TA is lower than the lower limit temperature, the processing advances from step S17 to step S18 of Fig. 3. Then, in step S18 of Fig. 3, the motor of the blower 122 is stopped, and the compressor 111 is stopped.

Then, the temperature TA and the temperature TB rise gradually.

At time point t6, the temperature TB has risen above the upper limit temperature. As a temperature higher than the upper limit temperature is detected, the processing advances from step S12 to step S13 of Fig. 3.

In step S13 of Fig. 3, the temperature sensor 14B that has detected the temperature higher than the upper limit temperature is identified as the temperature sensor 14. Then, in step S14 of Fig. 3, the blower 122 is controlled with a motor rotation speed of 100% so that the cooled air reaches the periphery of the position where the temperature sensor 14B is installed. Accordingly, in step S15 of Fig. 3, the frequency of the compressor 111 is controlled at 100% so that the COP of the cooling system 10 becomes high.

Then, the temperature TA and the temperature TB fall gradually.

### ^{∗∗∗} Effect of Embodiment 1 ^{∗∗∗}

As described above, in the cooling system 10 according to Embodiment 1, the air volume of the blower 122 is controlled so that the upper limit of reach of air cooled by the heat exchanger 121 is within the target range defined about, as a reference, the target position where the temperature sensor 14 that has detected a temperature higher than the upper limit temperature is installed. This makes it possible to send the cooled air to the temperature-risen position while reducing the power consumption. As a result, it has become possible to perform control to reduce power consumption while decreasing temperature non-uniformities in the target space.

Also, in the cooling system 10 according to Embodiment 1, the compressor 111 is controlled with a frequency that increases an operation efficiency in accordance with the air volume of the blower 122. This makes it possible to perform control so as to further decrease the power consumption.

### ^{∗∗∗} Other Configurations ^{∗∗∗}

### < Modification 1 >

The wind control unit 23 may control the air volume considering a temperature-increase trend.

According to a specific example, assume that even if a temperature detected by one temperature sensor 14 is equal to or lower than the upper limit temperature, an increase per unit time of the temperature detected by that temperature sensor 14 is equal to or larger than a threshold value. In this case, the wind control unit 23 may control the air volume of the blower 122 so that the upper limit of reach of air cooled by the heat exchanger 121 is within a target range defined about, as a reference, the target position where the temperature sensor 14 is installed.

For example, assume that the temperature sensor 14A and the temperature sensor 14B are arranged as illustrated in Fig. 1. Assume that, at this time, a temperature detected by the temperature sensor 14A is equal to or lower than the upper limit temperature, but an increase per unit time of the temperature detected by the temperature sensor 14A is equal to or larger than the threshold value. In this case, the wind control unit 23 may control an air volume of the blower 122 so that the upper limit of reach of air cooled by the heat exchanger 121 is within a target range defined about, as a reference, the target position where the temperature sensor 14A is installed.

The wind control unit 23 may identify the target temperature sensor 14 considering the temperature-increase trend.

According to a specific example, assume that the plurality of temperature sensors 14 having detected temperatures higher than the upper limit temperature include a temperature sensor 14 indicating an increase in detected temperature per unit time that is equal to or larger than the threshold value. In this case, a temperature sensor 14 indicting a temperature increase per unit time that is equal to or larger than the threshold value may be identified as the target temperature sensor 14, in place of a temperature sensor 14 located at a position where the temperature tends to rise most easily.

For example, assume that the temperature sensor 14A and the temperature sensor 14B are arranged as illustrated in Fig. 1. Assume that, at this time, a temperature detected by the temperature sensor 14A and a temperature detected by the temperature sensor 14B are both equal to or higher than the upper limit value. In this case, according to Embodiment 1, the wind control unit 23 identifies the temperature sensor 14B located at a position deep in the target space 50 and remote from the cooling machine 12, as the target temperature sensor 14. Alternatively, if an increase per unit time of the temperature detected by the temperature sensor 14A is equal to or larger than the threshold value, the wind control unit 23 may identify the temperature sensor 14A as the target temperature sensor 14.

### < Modification 2 >

In Embodiment 1, the cooling system 10 is provided with the two temperature sensors 14, as illustrated in Fig. 1. Alternatively, the cooling system 10 may be provided with three or more temperature sensors 14. At this time, at least one temperature sensor 14 is desirably arranged deep in the target space 50 and remote from the cooling machine 12. Besides, temperature sensors 14 are desirably arranged at positions such as near an outlet/inlet of the target space 50 and near a position where the stock item is placed.

### Embodiment 2.

An upper limit temperature and a lower limit temperature are set higher for a temperature sensor 14 installed in an area other than a periphery of a position where a stock item is placed, rather than for a temperature sensor 14 installed on the periphery. In this respect, Embodiment 2 is different from Embodiment 1. In Embodiment 2, this difference will be described, and the same feature will not be described.

### ^{∗∗∗} Description of Configurations ^{∗∗∗}

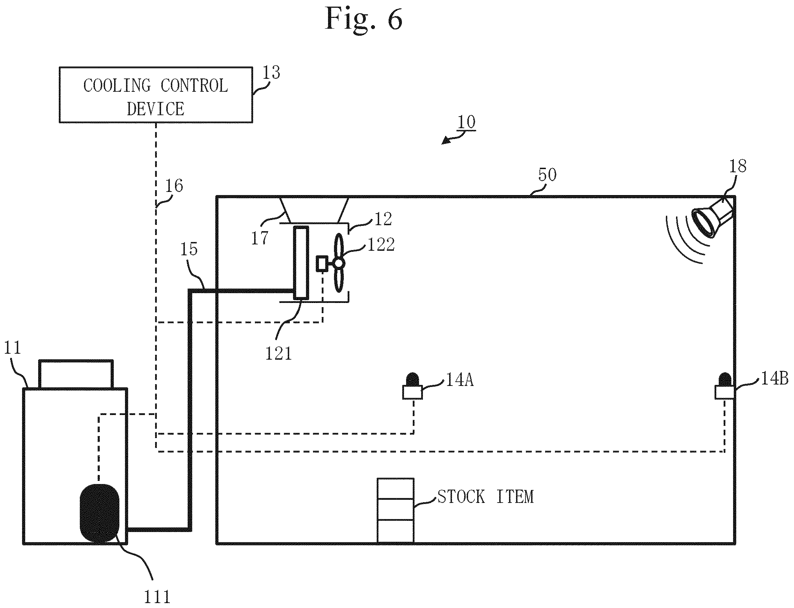

A configuration of a cooling system 10 according to Embodiment 2 will be described with referring to Fig. 6.

The cooling system 10 is provided with a detection sensor 18. In this respect, the cooling system 10 is different from the cooling system 10 according to Embodiment 1. The detection sensor 18 is a sensor that detects a position where a stock item is placed in a target space 50.

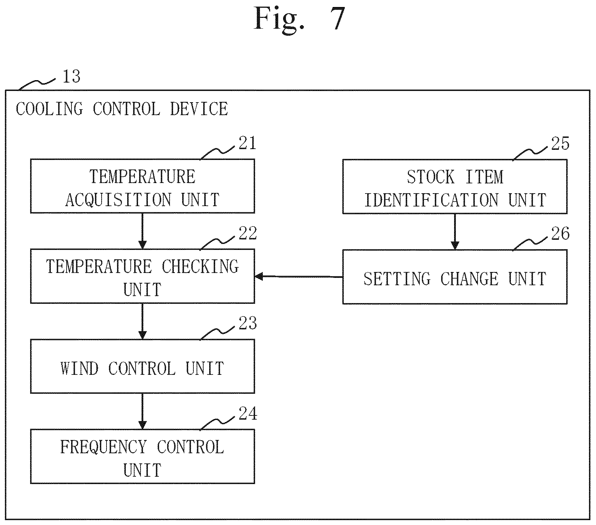

A configuration of the cooling control device 13 according to Embodiment 2 will be described with referring to Fig. 7.

The cooling control device 13 is provided with a stock item identification unit 25 and a setting change unit 26. In this respect, the cooling control device 13 is different from the cooling control device 13 according to Embodiment 1. By the detection sensor 18, the stock item identification unit 25 identifies the position where the stock item is placed in the target space 50. The setting change unit 26 sets the upper limit temperature and the lower limit temperature higher for the temperature sensor 14 installed in an area other than a peripheral area on the periphery of the position where the stock item identified by the stock item identification unit 25 is placed, rather than for the temperature sensor 14 installed in the peripheral area .

### ^{∗∗∗} Description of Operations ^{∗∗∗}

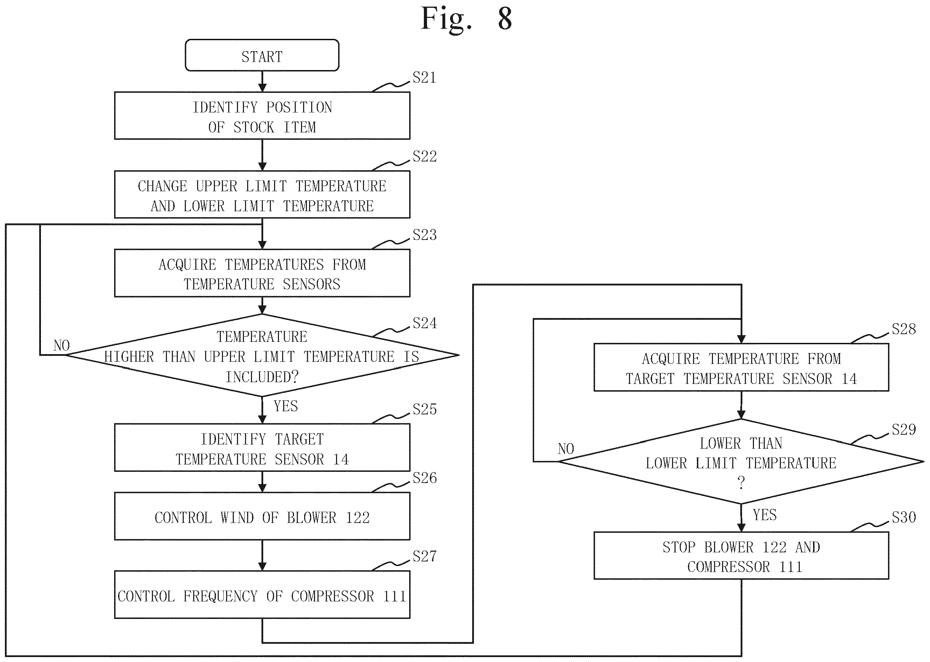

Operations of the cooling system 10 according to Embodiment 2 will be described with referring to Fig. 8.

The operations of the cooling system 10 according to Embodiment 2 correspond to a cooling control method according to Embodiment 2.

Processes of step S23 to step S30 are the same as the processes of step S11 to step S18 of Fig. 3.

### (Step S21 of Fig. 8: Stock Item Identification Process)

The stock item identification unit 25 acquires a detection result of the detection sensor 18 and identifies the position where the stock item is placed in the target space 50, on the basis of the detection result.

### (Step S22 of Fig. 8: Setting Change Process)

The setting change unit 26 identifies the temperature sensor 14 installed in the peripheral area which is on the periphery of the position where the stock item identified in step S21 is placed. Specifically, the setting change unit 26 takes, as the peripheral area, a range within a reference distance about the position where the stock item identified in step S21 is placed, and identifies a temperature sensor 14 whose installation position is included in the peripheral area.

Then, the setting change unit 26 sets an upper limit temperature and a lower limit temperature that are each higher by a correction temperature, for the temperature sensor 14 other than the identified temperature sensor 14. The correction temperature is a temperature that is set in advance by a user.

### ^{∗∗∗} Effect of Embodiment 2 ^{∗∗∗}

As described above, in the cooling system 10 according to Embodiment 2, the upper limit temperature and the lower limit temperature are set higher for the temperature sensor 14 installed in the area other than the periphery of the position where the stock item is placed, rather than for the temperature sensor 14 installed on the periphery. Hence, a temperature detected by the temperature sensor 14 installed at a position where no stock item is placed does not exceed the upper limit temperature easily. As a result, less often, an air volume of the blower 122 is increased to reach the area where no stock item is placed. This makes it possible to reduce power consumption.

### ^{∗∗∗} Other Configurations ^{∗∗∗}

### < Modification 3 >

In Embodiment 2, processes of step S21 and step S22 in Fig. 8 are executed only at the start of operation of the cooling system 10, and the upper limit temperature and the lower limit temperature are set. Alternatively, the processes of step S21 and step S22 of Fig. 8 may be executed periodically, or at an occurrence of an event such as unloading/loading of a stock item.

### Embodiment 3.

Embodiment 3 is different from Embodiment 1 or 2 in that a wind direction is controlled. In Embodiment 3, this difference will be described, and the same feature will not be described.

In Embodiment 3, an example obtained by adding a function to Embodiment 1 will be described. Alternatively, it is possible to add a function to Embodiment 2.

### ^{∗∗∗} Description of Configurations ^{∗∗∗}

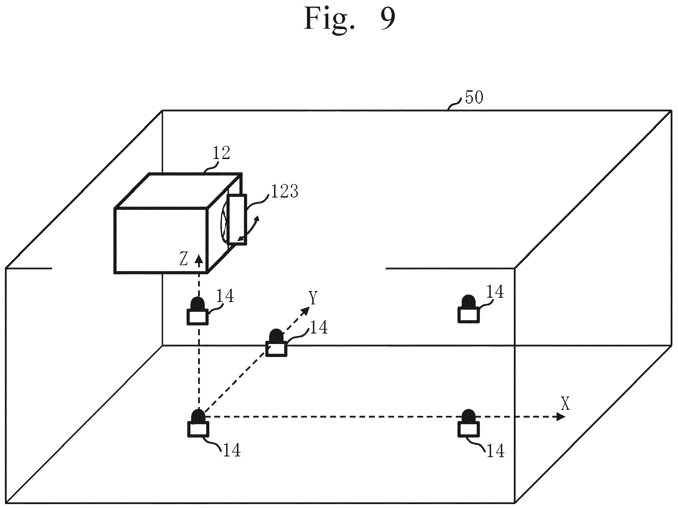

A configuration of a cooling system 10 according to Embodiment 3 will be described with referring to Fig. 9.

In Fig. 9, only configurations of part of the cooling system 10 are illustrated, and configurations such as a heat source machine 11 and a cooling control device 13 are omitted.

The cooling system 10 is provided with a plurality of temperature sensors 14 also in a right and left direction (Y-direction of Fig 9) which is perpendicular to a blowing direction (X-direction of Fig. 9) of a blower 122. In this respect, the cooling system 10 is different from the cooling system 10 according to Embodiment 1. Note that in Fig. 9, the cooling system 10 is provided with a plurality of temperature sensors 14 also in a vertical direction (Z-direction of Fig. 9).

In the cooling system 10, a cooling machine 12 is provided with a flap 123. In this respect, the cooling system 10 is different from the cooling system 10 according to Embodiment 1. The flap 123 is disposed in the vicinity of a blowing port of the blower 122. The flap 123 is a device that changes an orientation in the right and left direction (Y-direction of Fig. 9) of wind being blown by the blower 122.

### ^{∗∗∗} Description of Operations ^{∗∗∗}

Operations of the cooling system 10 according to Embodiment 3 will be described with referring to Fig. 3.

The operations of the cooling system 10 according to Embodiment 3 correspond to a cooling control method according to Embodiment 3.

Processes of step S11 to step S13 and processes of step S15 to step S18 are the same as their counterparts in Embodiment 1.

### (Step S14 of Fig. 3: Wind Control Process)

A wind control unit 23 of the cooling control device 13 controls an air volume of the blower 122 so that an upper limit of reach of air cooled by a heat exchanger 121 is within a target range defined about a target position as a reference, just as in Embodiment 1. In this case, by controlling the flap 123, the wind control unit 23 controls wind direction so that wind is sent to the target position.

### ^{∗∗∗} Effect of Embodiment 3 ^{∗∗∗}

As described above, in the cooling system 10 according to Embodiment 3, not only the air volume but also the wind direction of the blower 122 is controlled. This makes it possible to send cooled air to a temperature-risen position with accuracy. As a result, it has become possible to perform control to reduce power consumption while reducing temperature non-uniformities in the target space.

As illustrated in Fig. 9, by arranging the plurality of temperature sensors 14 in the blowing direction (X-direction in Fig. 9), the right and left direction (Y-direction in Fig. 9), and the vertical direction (Z-direction in Fig. 9), the temperature of the target space 50 can be grasped accurately per position. As a result, the air volume and wind direction can be controlled appropriately.

Embodiments and modifications of the present invention have been described above. Of these embodiments and modifications, several ones may be practiced by combination. Also, one or several ones of these embodiments and modifications may be practiced partially. Note that the present invention is not limited to the above-mentioned embodiments and modifications, but can be changed in various manners as necessary.

### Reference Signs List

10: cooling system; 11: heat source machine; 12: cooling machine; 13: cooling control device; 14: temperature sensor; 15: refrigerant pipe; 16: signal line; 17: hanging tool; 18: detection sensor; 111: compressor; 121: heat exchanger; 122: blower; 123: flap; 21: temperature acquisition unit; 22: temperature checking unit; 23: wind control unit; 24: frequency control unit; 25: stock item identification unit; 26: setting change unit; 50: target space.

## Claims

1. A cooling control device comprising:
a temperature acquisition unit to acquire temperatures detected by a plurality of temperature sensors installed at different positions in a target space; and
a wind control unit to refer to the temperatures acquired by the temperature acquisition unit so as to identify a target position, and to control an air volume of a blower so that an upper limit of reach of air cooled by a heat exchanger is within a target range defined about, as a reference, the target position where a temperature sensor that has detected a temperature higher than a reference temperature is installed, among the plurality of temperature sensors.

2. The cooling control device according to claim 1,
wherein the heat exchanger is a device that exchanges heat between a refrigerant and air in the target space, in a vapor compression type cooling cycle having a compressor,
the cooling control device further comprising
a frequency control unit to control the compressor with a frequency that increases an operation efficiency in accordance with the air volume controlled by the wind control unit.

3. The cooling control device according to claim 1 or 2,
wherein the wind control unit identifies, as the target position, a position where a temperature sensor indicating a temperature increase per unit time that is equal to or larger than a threshold value is installed.

4. The cooling control device according to any one of claims 1 to 3, further comprising:
a stock item identification unit to identify a position where a stock item is placed in the target space; and
a setting change unit to set a reference temperature higher for a temperature sensor installed in an area other than a peripheral area which is on a periphery of a position where the stock item identified by the stock item identification unit is installed, rather than for a temperature sensor installed in the peripheral area.

5. The cooling control device according to any one of claims 1 to 4,
wherein the wind control unit controls a wind direction so that wind is sent to the target position.

6. A cooling system comprising:
a heat exchanger to cool air in a target space;
a blower to send air cooled by the heat exchanger;
a plurality of temperature sensors installed at different positions in the target space; and
a cooling control device to control an air volume of the blower so that an upper limit of reach of air cooled by the heat exchanger is within a target range defined about, as a reference, a target position where a temperature sensor that has detected a temperature higher than a reference temperature is installed, among the plurality of temperature sensors.

7. A cooling control method comprising:
by a plurality of temperature sensors installed at different positions in a target space, detecting temperatures of positions where the plurality of temperature sensors are installed; and
by a cooling control device, controlling an air volume of a blower so that an upper limit of reach of air cooled by a heat exchanger is within a target range defined about, as a reference, a target position where a temperature sensor that has detected a temperature higher than a reference temperature is installed, among the plurality of temperature sensors.
